# EUROPEAN PATENT SPECIFICATION

(11) **EP 2 522 226 B1**
(45) Date of publication and mention of the grant of the patent: **11.07.2018**
(21) Application number: 12167797.5
(22) Date of filing: 11.05.2012
(51) Int. Cl.: A23B 4/24, A23B 4/20, A23L 3/3463, A23L 17/30

(54) **Composition for the preservation of caviar**
Zusammensetzung zur Konservierung von Kaviar
Composition pour la conservation du caviar

(30) Priority: 11.05.2011 RU 2011118589
(43) Date of publication of application: 14.11.2012
(73) Proprietor: Desietra GmbH, 36041 Fulda (DE)
(72) Inventor: Kopylenko, Liliya, 107392 Moscow (RU); Koryazova, Irina, 107392 Moscow (RU)
(74) Representative: Lobemeier, Martin Landolf

(56) References cited:
- WO-A2-99/60863
- JP-A- 2008 092 869
- RU-A- 2005 108 065
- RU-A- 2008 129 840
- RU-C1- 2 048 111
- RU-C1- 2 138 184
- RU-C2- 2 265 381
- SU-A1- 1 662 469
- HARAGUCHI H ET AL: "Protection against oxidative damage by dihydroflavonols in Engelhardtia chrysolepis", BIOSCIENCE BIOTECHNOLOGY BIOCHEMISTRY, JAPAN SOCIETY FOR BIOSCIENCE, BIOTECHNOLOGY, AND AGROCHEMISTRY, TOKYO, JAPAN, vol. 60, no. 6, 1 June 1996 (1996-06-01), pages 945-948, XP002698630, ISSN: 0916-8451

## Description

### FIELD OF THE INVENTION

The invention is related to fish industry, in particularly to compositions for fish caviar conservation, predominantly of salmon and sturgeons types, preferably grown in aquaculture. Furthermore, the present invention describes a method for the preservation of fish caviar.

### DESCRIPTION OF RELATED ART

The known method of fish caviar preserving is done by salting caviar eggs which have been preliminary rinsed out in salty solution of sodium chloride with the addition of conservative - potassium bicarbonate in the amount of 0.4-0.5% to the weight of caviar, also with the addition of antiseptic, in particularly lysozyme in the amount of 0.05-0.15% or sodium pyrophosphoric in the amount of 0.3-0.4% to the weight of caviar (patent SU 1662469 A1 , IPC class A23 B 4/14, year 1989).

The disadvantage of this method is the lack of antioxidant effect which is expressed in the appearance of oxidised fat aftertaste.

Another food additive for caviar and fish products contains sorbic acid, salt of sorbic acid, salt of isoascorbic acid and the mix of carboxylic acids and their salts, selected form the range which contains propionic, wine, succinic, benzoic, arachidonic, levulinic and malonic acids, salt of malic acid, alanine, salt of citric acid, polyunsaturated fatty acids from fish fats. The additive can also contain isoascorbic acid and gulonic acid or its salt in the amount of 20-30% (look the patent RU 2265381 C2 , patent class A 23L 1/328, year 2003).

This additive allows keeping microbiological safety of the products. However, this additive is multicomponent and contains a large number of chemical agents. Interaction of components during self-life and their interactivity with non-protein, lipidic and other caviar compounds during its self-life can create complexes, which have a negative impact on human body and decrease caviar nutritional value.

Composition which is the closest to the present invention contains sodium chloride, potassium bicarbonate and organic acid or salt of organic acid in the amount of 1.0-3.0% and 1.5-4.0% respectively. Besides, antiseptic is added in the amount 1-2% (look the patent RU 2048111 C1 , patent class A23 B 4/14, year 1993).

The above mentioned composition extends the variety of fish food products and provides rational use of raw material. However, it is not effective in preserving of salmon or sturgeon caviar from aquaculture.

A further composition specifically disclosed for the preservation of caviar is known from RU 2 138 184. Other compositions for the preservation of food in general are known from RU 2008 129840 A, RU 2005 108065 A, JP 2008 092869 A and Haraguchi H et al: "Protection against oxidative damage by dihydroflavonols in Engelhardtia chrysolepis" (Bioscience Biotechnology Biochemistry, Japan Society for Bioscience, Biotechnology, and Agrochemistry, vol. 60, no. 6, 1 June 1996 (1996-06-01), pages 945-948).

### OBJECT OF THE INVENTION

The technical objective of the present invention is the creation of composition which will allow improving consumer properties of fish caviar. A further objective of the present invention is in the creation of the composition for preserving caviar from fish grown in aquaculture. Especially, the composition should decrease toxic products form oxidised lipids in caviar and thereby to increase the period of the product self-life.

A further objective of the present invention is in the creation of the composition for preserving caviar from fish grown in aquaculture.

Furthermore, the composition for preserving caviar should not impart any adverse effect to the caviar.

### SUMMARY OF THE INVENTION

These objects and also further objects which are not stated explicitly but are immediately derivable or discernible from the connections discussed herein by way of introduction are achieved by a composition having all features of claim 1. Appropriate modifications to the method are protected in the claims referring back to claim 1.

The present invention provides a composition for the preserving of caviare from fish grown in aquaculture comprising sodium chloride, at least one alkali bicarbonate, at least one organic acid and/or organic acid salt, characterized in that the composition comprises dihydroquercetin.

Sodium chloride is well known. Preferably the composition comprises at least 80 %, more preferably at least 85, and most preferably at least 90 % by weight of sodium chloride. This component may include small amounts of potassium chloride.

Preferably, the composition comprises 1.0 - 10 %, more preferably 2.0 - 8 %, especially preferably 3.0 - 5.5 % and most preferably 4.0 - 5.0 % by weight of alkali bicarbonate.

Alkali bicarbonates are well known. This component of the present composition preferably includes potassium bicarbonate and/or sodium bicarbonate with potassium bicarbonate being preferred. More preferably the composition comprises 1.0 - 10 %, more preferably 2.0 - 8 %, especially preferably 3.0 - 5.5 % and most preferably 4.0 - 5.0 % by weight of potassium bicarbonate.

Preferably, the composition comprises 1.0 - 10 %, more preferably 1.5 - 8 %, especially preferably 2.0 - 6.0 % and most preferably 3.0 - 5.0 % by weight of organic acid and/or salt of organic acid.

Preferably the organic acid and/or salt of organic acid comprises citric acid, sorbic acid, ascorbic acid, sodium citrate, sodium sorbate, sodium ascorbate, potassium citrate, potassium sorbate and/or potassium ascorbate. More preferably, sorbic acid is taken for example as an organic acid and sodium citrate or sodium ascorbate can be taken as the salt of organic acid.

Preferably, the composition comprises 0.005-0.5 %, more preferably 0.01 to 0.3 % and more preferably 0.02 to 0.1 % by weight of dihydroquercetin.

Dihydroquercetin plays the role of natural antioxidant. This compound is also known as Taxifoliol. Preferably, (2R,3R)-2-(3,4-dihydroxyphenyl)-3,5,7-trihydroxy-2, 3-dihydrochromen-4-one is used having the CAS no. 480-18-2. Dihydroquercetin is segregated from larch wood and presents itself fine-crystalline amorphous powder of light yellow color without odour. It refers to vitamins of group P. Its advantage is antiradical activity at the approximate concentration 0.0001 - 0.00001 % and absolute absence of mutagenic activity for human beings. Having antioxidising and radioprotective influence dihydroquercetin has a whole range of positive effects on metabolism reactions and the dynamic of different pathological processes. Dihydroquercetin is used in the production of drugs and also as an additive to food products with the aim to prevent oxidising damage of products with a high content of fat, including milk and confectionery products.

Still dihydroquercetin was not used in addition to a composition for caviar preserving and in combination with potassium bicarbonate, organic acid and/or its salt. Quantitative proportions of the selected components improve the desired effect in a synergistic manner.

According to a preferred embodiment of the present invention, the composition of the present invention comprises at least 80 % by weight, more preferably at least 95 % and more preferably at least 99 % of the components mentioned above, i. e. sodium chloride, alkali bicarbonate, dihydroquercetin, organic acid and/or organic acid salt. More preferably the composition of the present invention consists of sodium chloride, alkali bicarbonate, dihydroquercetin, organic acid and/or organic acid salt.

The composition may preferably contain potassium bicarbonate, organic acid or its salt and salt (sodium chloride), at the same time the composition additionally contains antioxidant of natural origine - dihydroquercetin, in the following proportion in % to the weight:

| | |
|---|---|
| potassium bicarbonate | 3.0 - 5.5, more preferably 4.0-5.0 |
| organic acid or salt of organic acid | 3.0-5.0 |
| dihydroquercetin | 0.02-0.1 |
| sodium chloride | the residual. |

Preferably, the composition consists of sodium chloride, potassium bicarbonate, organic acid and/or salt of organic acid and dihydroquercetin with the following amounts in weight %:

| | |
|---|---|
| potassium bicarbonate | 3.0-5.5 |
| organic acid and/or salt of organic acid | 3.0-5.0 |
| dihydroquercetin | 0.02-0.1 |
| sodium chloride | the residual up to 100% |

The technology of breeding sturgeons and salmon types of fish in aquarium and cage complexes permits to regulate the get food caviar regardless of natural maturation.

Sturgeon caviar is obtained by method performed with a living animal by means of «cesarean» or by means of cutting oviduct. After taking caviar, female is put in the pool for growing and further maturation with intent to obtain caviar.

Artificial feed and the terms of fish breeding in aquaculture (in open water or in closed system) influence on elasticity (springiness) of an egg membrane, fat quantity and organoleptic indicators. As a result caviar from fish grown in aquaculture differs from caviar of fish from natural water source.

Thereby and the composition for preserving has been worked out which improves organoleptic properties of caviar, guarantees quality of caviar and ensure microbial safety of the product up to 12 months. Shelf-life is 12 months.

The combination of components of synthetic and natural origin solves the objective of the present invention and creates synergistic effect inhibiting more intensively the process of lipids peroxide oxidization, preventing the appearance of oxidised fat aftertaste and providing microbial safety.

Furthermore, the present invention provides a method for the preserving of caviar comprising adding a composition of the present invention. Preferably, the caviar is obtained from fish grown in aquaculture including aquarium and cage complexes.

The caviar can be preferably obtained from sturgeons and salmon types.

Preferably, the composition is added in an amount of 3.5 to 5.5 % by weight to the weight of caviar.

### EXAMPLES

The composition is prepared by preliminary trituration and the following mixing of components, wherein the components sums up to a total amount of which makes 100%. The data in table #1 are based on weight.

The examples are shown in the table #1.

**Table #1**

| Components | Example #1 | Example #2 | Example #3 |
|---|---|---|---|
| potassium bicarbonate | 5.5 | 3.0 | 4.0 |
| organic acid, sorbic acid | 2.0 | | |
| salt of organic acid, sodium ascorbate | | 5.0 | 3.0 |
| dihydroquercetin | 0.1 | 0.02 | 0.05 |
| sodium chloride | 92.4 | 91.98 | 92.95 |

### References Cited

### Patent literature

SU 1662469 A1
RU 2265381 C2
RU 2048111 C1

## Claims

1. A composition for the preserving of caviar from fish grown in aquaculture comprising sodium chloride, at least one alkali bicarbonate, at least one organic acid and/or organic acid salt,
**characterized in that**
the composition comprises dihydroquercetin.

2. The composition according to claim 1,
**characterized in that**
the composition comprises at least 80 % by weight of sodium chloride.

3. The composition according to claim 2,
**characterized in that**
the composition comprises 1.0-10 % by weight of alkali bicarbonate.

4. The composition according to at least one of the preceding claims,
**characterized in that**
the composition comprises 1.0-10 % by weight of organic acid and/or salt of organic acid.

5. The composition according to at least one of the preceding claims,
**characterized in that**
the composition comprises 0.005-0.5 % by weight of dihydroquercetin.

6. The composition according to at least one of the preceding claims,
**characterized in that**
said alkali bicarbonate comprises potassium bicarbonate and/or sodium bicarbonate.

7. The composition according to at least one of the preceding claims,
**characterized in that**
said organic acid and/or salt of organic acid comprises citric acid, sorbic acid, ascorbic acid, sodium citrate, sodium sorbate, sodium ascorbate, potassium citrate, potassium sorbate and/or potassium ascorbate.

8. The composition according to at least one of the preceding claims,
**characterized in that**
composition consists of sodium chloride, potassium bicarbonate, organic acid and/or salt of organic acid and dihydroquercetin with the following amounts in weight %:
| | |
|---|---|
| potassium bicarbonate | 3.0-5.5 |
| organic acid and/or salt of organic acid | 3.0-5.0 |
| dihydroquercetin | 0.02-0.1 |
| sodium chloride | the residual up to 100% |

9. A method for the preserving of caviar
**characterized in that**
a composition as claimed in at least one of the claims 1 to 8 is added to caviar.

10. The method according to claim 9,
wherein the caviar is obtained from fish grown in aquaculture.

11. The method according to claim 9 or 10,
wherein the composition is added in an amount of 3.5 to 5.5 % by weight to the weight of caviar.

## Patentansprüche

1. Zusammensetzung für das Konservieren von Kaviar aus in Aquakultur gezogenen Fischen, enthaltend Natriumchlorid, wenigstens ein Alkalibicarbonat, wenigstens eine organische Säure und/oder ein Salz einer organischen Säure,
**dadurch gekennzeichnet, dass**
die Zusammensetzung Dihydroquercetin enthält.

2. Zusammensetzung nach Anspruch 1, **dadurch gekennzeichnet, dass** die Zusammensetzung wenigstens 80 Gew.-% Natriumchlorid enthält.

3. Zusammensetzung nach Anspruch 2, **dadurch gekennzeichnet, dass** die Zusammensetzung 1,0-10 Gew.-% Alkalibikarbonat enthält.

4. Zusammensetzung nach einem der vorhergehenden Ansprüche, **dadurch gekennzeichnet, dass** die Zusammensetzung 1,0-10 Gew.-% der organischen Säure und/oder des Salzes einer organischen Säure enthält.

5. Zusammensetzung nach einem der vorhergehenden Ansprüche, **dadurch gekennzeichnet, dass** die Zusammensetzung 0,005-0,5 Gew.-% Dihydroquercetin enthält.

6. Zusammensetzung nach einem der vorhergehenden Ansprüche, **dadurch gekennzeichnet, dass** das Alkalibicarbonat Kaliumbicarbonat und/oder Natriumbikarbonat umfasst.

7. Zusammensetzung nach einem der vorhergehenden Ansprüche, **dadurch gekennzeichnet, dass** die organische Säure und/oder das Salz einer organischen Säure Zitronensäure, Sorbinsäure, Ascorbinsäure, Natriumcitrat, Natriumsorbat, Natriumascorbat, Kaliumcitrat, Kaliumsorbat und/oder Kaliumascorbat umfasst.

8. Zusammensetzung nach einem der vorhergehenden Ansprüche, **dadurch gekennzeichnet, dass** die Zusammensetzung aus Natriumchlorid, Kaliumbicarbonat, einer organischen Säure und/oder Salz einer organischen Säure und Dihydroquercetin mit folgenden Anteilen in Gew.-% besteht:
| | |
|---|---|
| Kaliumbicarbonat | 3,0-5,5 |
| organische Säure und/oder Salz einer organischen Säure | 3,0-5,0 |
| Dihydroquercetin | 0,02-0,1 |
| Natriumchlorid | Rest auf 100 % |

9. Verfahren zum Konservieren von Kaviar, **dadurch gekennzeichnet, dass** eine Zusammensetzung nach wenigstens einem der Ansprüche 1 bis 8 zum Kaviar hinzugefügt wird.

10. Verfahren nach Anspruch 9, wobei der Kaviar aus in Aquakultur gezogenen Fischen erhalten ist.

11. Verfahren nach Anspruch 9 oder 10, wobei die Zusammensetzung in einem Verhältnis von 3,5 bis 5,5 Gew.-% vom Kaviargewicht hinzugefügt wird.

## Revendications

1. Composition, destinée à la conservation de caviar provenant de poisson élevé en aquaculture, comprenant du chlorure de sodium, au moins un bicarbonate alcalin, au moins un acide organique et/ou un sel d'acide organique,
**caractérisée en ce que**
la composition comprend de la dihydroquercétine.

2. Composition selon la revendication 1, **caractérisée en ce que** la composition comprend au moins 80 % en poids de chlorure de sodium.

3. Composition selon la revendication 2, **caractérisée en ce que** la composition comprend de 1,0 à 10 % en poids de bicarbonate alcalin.

4. Composition selon l'une au moins des revendications précédentes, **caractérisée en ce que** la composition comprend de 1,0 à 10 % en poids d'acide organique et/ou de sel d'acide organique.

5. Composition selon l'une au moins des revendications précédentes, **caractérisée en ce que** la composition comprend de 0,005 à 0,5 % en poids de dihydroquercétine.

6. Composition selon l'une au moins des revendications précédentes, **caractérisée en ce que** ledit bicarbonate alcalin comprend du bicarbonate de potassium et/ou du bicarbonate de sodium.

7. Composition selon l'une au moins des revendications précédentes, **caractérisée en ce que** ledit acide organique et/ou sel d'acide organique comprend l'acide citrique, l'acide sorbique, l'acide ascorbique, le citrate de sodium, le sorbate de sodium, l'ascorbate de sodium, le citrate de potassium, le sorbate de potassium et/ou l'ascorbate de potassium.

8. Composition selon l'une au moins des revendications précédentes, **caractérisée en ce que** la composition est constituée de chlorure de sodium, de bicarbonate de potassium, d'acide organique et/ou de sel d'acide organique et de dihydroquercétine dans les quantités suivantes en % en poids :
| | |
|---|---|
| Bicarbonate de potassium | 3,0 à 5,5 |
| Acide organique et/ou sel d'acide organique | 3,0 à 5,0 |
| Dihydroquercétine | 0,02 à 0,1 |
| Chlorure de sodium | le résidu jusqu'à 100 % |

9. Procédé de conservation de caviar, **caractérisé en ce que** une composition selon l'une au moins des revendications 1 à 8 est ajoutée au caviar.

10. Procédé selon la revendication 9, dans lequel le caviar est obtenu à partir de poisson élevé en aquaculture.

11. Procédé selon la revendication 9 ou 10, dans lequel la composition est ajoutée dans une quantité de 3,5 à 5,5 % en poids par rapport au poids de caviar.
